# EUROPÄISCHE PATENTSCHRIFT

(11) **EP 0 860 266 B1**
(45) Veröffentlichungstag und Bekanntmachung des Hinweises auf die Patenterteilung: **02.05.2002**
(21) Anmeldenummer: 98100671.1
(22) Anmeldetag: 16.01.1998
(51) Int. Cl.: B29C 65/78, B29C 31/08, B29D 30/42

(54) **Spleissmaschine**
Splicing apparatus
Dispositif de soudage

(30) Priorität: 25.02.1997 DE 19707367
(43) Veröffentlichungstag der Anmeldung: 26.08.1998
(73) Patentinhaber: Karl Eugen Fischer GmbH Maschinenfabrik, D-96224 Burgkunstadt (DE)
(72) Erfinder: Gesslein, Dietmar, 96257 Marktgraitz (DE); Kunig, Rainer, 96224 Burgkunstadt (DE)
(74) Vertreter: Matschkur, Lindner Blaumeier Patent- und Rechtsanwälte

(56) Entgegenhaltungen:
- EP-A- 0 698 479
- US-A- 4 411 724

## Beschreibung

Die Erfindung bezieht sich auf eine Spleißmaschine zum insbesondere stumpfen Spleißen von Cordbandstreifen aus Stahl- oder Textilcord, mit einem Zuführ-Transportband zum Heranfördern der Vorderkante eines Streifens an die Hinterkante des gespleißten, auf einer Abfördereinrichtung liegenden Cordbandes, und mit einer quer zur Förderrichtung verfahrbaren, aus einem oberen und einem unteren Spleißkopf, die gegeneinander verfahrbar sind, bestehenden Spleißvorrichtung.

Derartige Spleißmaschinen (siehe Z.B. EP-A-0 698 479) sind bisher grundsätzlich so aufgebaut, daß die Führung, längs der die aus den beiden Spleißköpfen bestehende Spleißvorrichtung verfahrbar ist, von der Senkrechten zur Förderrichtung bis etwa einen 16°-Winkel verschwenkbar ist, um entsprechend dem jeweiligen Spleißwinkel, d.h. dem Zuschnittwinkel der Streifen, das Verspleißen des anzusetzenden Streifens an das Cordband durch bloße Bewegung der Spleißvorrichtung längs der Spleißkante zu bewirken, während das Cordband und der einzuspleißende Streifen dabei festgehalten werden. Diese Art der Ausbildung von Spleißvorrichtungen hat zum einen den Nachteil, daß zum Spleißen von Streifen mit sehr spitzen Winkeln, bei denen die Länge der Spleißkante erheblich größer ist als die Breite der Streifen, entsprechend lange Führungen vorgesehen werden müssen, die dann noch den Nachteil aufweisen, daß bei der Senkrechtstellung der Führung zur Förderrichtung diese Führungseinrichtungen erheblich über die Maschine seitlich überstehen und dabei den gesamten Produktionsablauf erheblich stören. Dies gilt in ganz besonderem Maß beim Verspleißen von Cordbandstreifen, die große Breiten aufweisen.

Der Erfindung liegt daher die Aufgabe zugrunde, eine Spleißmaschine der eingangs genannten Art so auszugestalten, daß unter Verwendung kurzer stabiler und in keiner Betriebsstellung störender Führungseinrichtungen für die Spleißvorrichtung auch breite Cordbandstreifen unter beliebigen Spleißwinkeln miteinander verbindbar sind.

Zur Lösung dieser Aufgabe ist erfindungsgemäß vorgesehen, daß die Spleißvorrichtung, bei gleichzeitiger Förderung des Cordbandes und des anzuspleißenden Streifens, längs einer Führung senkrecht zur Förderrichtung des Cordbandes bewegbar ist, wobei eine Steuerung der jeweiligen Geschwindigkeiten entsprechend dem Spleißwinkel erfolgt.

Zweckmäßige Weiterbildungen der Erfindung sind Gegenstand der abhängigen Ansprüche.

Durch die erfindungsgemäße Ausbildung der Spleißmaschine, bei der das Cordband und der anzuspleißende Streifen beim Spleißen nicht festgehalten werden, sondern in Förderrichtung weiterbewegt werden, ist es möglich, eine Schrägstellung der Führung, also ein schräges Verfahren der Spleißvorrichtung zur Längsrichtung des Cordbandes, völlig zu vermeiden und die Spleißvorrichtung einfach senkrecht zur Förderrichtung und damit auch Längsrichtung des Cordbandes zu bewegen. Durch die Überlagerung der Geschwindigkeiten einmal der Spleißvorrichtung und zum anderen des Cordbandes mit dem daran anliegenden anzuspleißenden Streifen ergibt sich ein schräg zur Längsrichtung verlaufender Geschwindigkeitsvektor, der durch entsprechende Einstellung der beiden Geschwindigkeiten jeden beliebigen Winkel annehmen kann. Man vermeidet auf diese Art und Weise lange Führungen, da die Führung für die Spleißvorrichtung nur so lang zu sein braucht, wie die größte Breite der zu verarbeitenden Cordbänder, und dies ist um mehr als den Faktor 2 kleiner als die bisherigen Führungslängen für den schräg zur Cordbandlängsrichtung zu verfahrenden Spleißkopf.

Dabei soll in Weiterbildung der Erfindung die Spleißvorrichtung um eine vertikale Achse entsprechend dem Spleißwinkel einstellbar sein, so daß beispielsweise die Rollenpaare der Spleißvorrichtung parallel zur Spleißkante ausgerichtet sind.

Durch die erfindungsgemäße Ausbildung der Spleißmaschine ist es zweckmäßig, die Abfördereinrichtung nicht wie bei bisherigen Maschinen als Auflagetisch mit ggf. einem dem leichteren Transport dienenden Luftkissen und mit die Bandkante 'ergreifenden, an Transporteinrichtungen befestigten Zangen auszubilden, sondern statt dessen ein Abförderband vorzusehen. Um dabei den Streifen in die gewünschte Position zu bringen, so daß eine Vorderkante mit der Hinterkante des bereits verspleißten Cordbandes übereinstimmt, ist in Weiterbildung der Erfindung vorgesehen, daß das Zuführ-Transportband im Auflagebereich des am Cordband anliegenden Streifens aus einer Vielzahl von beabstandeten, gemeinsam angetriebenen Einzelbändern besteht, zwischen denen über die Bandebene anhebbare Stützfördereinrichtungen zum Anheben der noch vor der Spleißvorrichtung liegenden Spitze des Streifens nach dem Anspleißen höhenverstellbar gelagert sind.

Durch diese Maßnahme ist es möglich, den Streifen über den aus den Einzelbändern bestehenden Übergabeabschnitt des Zuführförderbandes in Überlappungsstellung mit der Hinterkante des Cordbandes zu transportieren, das während dieses Transportes über die Stützfördereinrichtungen angehoben ist. Wenn die Kanten in übereinstimmender Position sind, was durch Fühleinrichtungen erkennbar ist, wird das Übergabe-Transportband angehalten und die Stützfördereinrichtungen werden wieder abgesenkt, so daß dann das Cordband und der Streifen - der mittels Greifern exakt ausgerichtet wird - genau mit ihren Kanten aneinanderliegen. Dies hat gegenüber bekannten Anordnungen, bei denen der Streifen in diese Anlageposition herangezogen wird, den großen Vorteil, daß auch breite und sehr klebrige Streifen problemlos und ohne jegliches Verziehen herangefördert werden können, was bei Transporteinrichtungen mit Greifern auch dann nicht problemlos möglich ist, wenn zusätzlich ein Luftkissen zwischen dem Arbeitstisch und dem Streifen erzeugt wird, um ihn nicht festkleben zu lassen.

Die Stützfördereinrichtungen können dabei in weiterer Ausgestaltung der Erfindung an zwischen den Einzelbändern verstellbar gelagerten Segmenten befestigte, in Förderrichtung beabstandete Rollen umfassen, wobei es sich als besonders zweckmäßig erwiesen hat, die Segmente einzeln oder gruppenweise entsprechend dem Spleißwinkel anhebbar zu machen, so daß nicht immer sämtliche Segmente betätigt werden müssen, sondern bei einem Produktionsgang vorher eingestellt werden kann, welche erforderlich sind, um jeweils nach Beendigung des Spleißens die noch vor der Führung der Spleißvorrichtung liegende Spitze des bereits angespleißten Streifens anzuheben, um über die Einzelbänder des Übergabeabschnitts einen neuen Streifen verziehungsfrei in die Spleißposition heranfördern zu können.

Um das Heranfördern weiterer Streifen unabhängig von der Annäherung des vorlaufenden Streifens, der an das Cordband angespleißt werden soll, durchführen zu können, soll das Zuführ-Transportband aus mehreren getrennt antreibbaren Bandabschnitten bestehen, wobei bevorzugt der in die Spleißvorrichtung einlaufende, aus Einzelbändern bestehende Übergabeabschnitt des Zuführ-Förderbandes wahlweise mit dem vorhergehenden Bandabschnitt des Zuführ-Förderbandes oder der, vorzugsweise ebenfalls als Abförderband ausgebildeten, Abfördereinrichtung synchron antreibbar ist.

Schließlich liegt es auch noch im Rahmen der Erfindung, von Fühlerelementen in der Spleißvorrichtung, also beispielsweise Lichtschranken im oberen und unteren Spleißkopf, betätigbare Feststelleinrichtungen für das Cordband und für den anzuspleißenden Streifen vorzusehen, um einmal das Cordband anzuhalten, wenn der Spleißvorgang beendet ist, und zwar in einer Position, in der der untere Eckpunkt genau unter der Spleißlinie der Spleißvorrichtung liegt, und zum anderen, um den anzufördernden Streifen - bei angehobenem Ende des Cordbandes - anzuhalten, wenn seine vorlaufende Spitze genau mit der Eckkante übereinstimmt und damit die nachlaufende Kante des Cordbandes mit der vorlaufenden Kante des Streifens in Anlagestellung ist.

Ein Ausführungsbeispiel der Erfindung ist in der Zeichnung dargestellt und wird in folgenden näher beschrieben. Dies Figuren der Zeichnung zeigen schematisch eine Aufsicht auf eine erfindungsgemäße Spleißvorrichtung in verschiedenen Bearbeitungsstufen und damit entsprechend verschiedenen Positionen des Cordbandes und des anzuspleißenden Streifens.

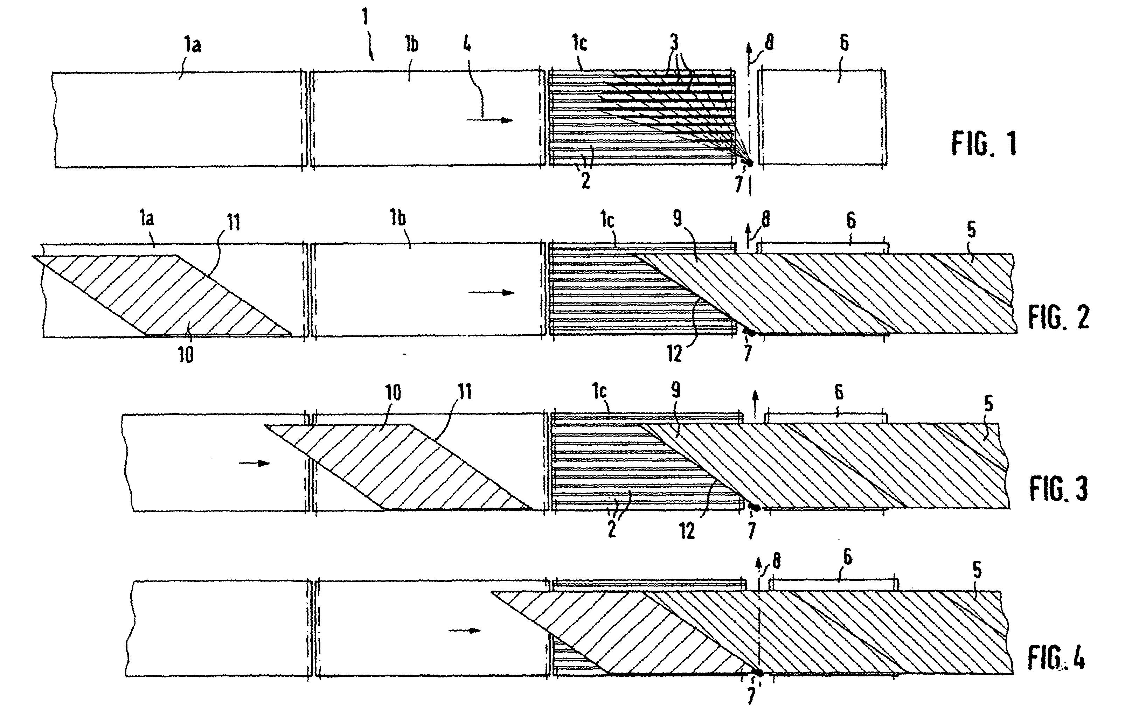

In Fig. 1 erkennt man das der Zuführung der anzuspleißenden Streifen dienende Zuführ-Transportband 1, bestehend aus einem Band 1a, einem Band 1b und einem nachgeschalteten, aus einer Vielzahl von beabstandeten Einzelbändern 2 bestehenden Übergabeabschnitt 1c. Zwischen den Einzelbändern 2 des Übergabeabschntts 1c ist eine Stützfördereinrichtung zum Anheben des darüberliegenden Endes eines Cordbandes aus bereits verspleißten Streifen angeordnet, die im dargestellten Ausführungsbeispiel bevorzugt aus Segmenten 3 besteht, an denen in Förderrichtung 4 und damit auch übereinstimmender Längsrichtung des Cordbandes 5 beabstandete, in den Zeichnungen nicht dargestellte Röllchen befestigt sind. Die Segmente sind dabei einzeln oder gruppenweise anhebbar, so daß jeweils nur eine solche Gruppe über die Bandebene der Einzelbänder 2 angehoben wird, daß die gesamte, zunächst auf dem Übergabeabschnitt 1c aufliegende Spitze des Cordbandes 5 anhebbar ist. Zwischen dem Übergabeabschnitt 1c des Zuführ-Transportbandes und dem Abföderband 6 für das fertig gespleißte Cordband ist eine aus einem oberen und einem unteren Spleißkopf bestehende, nur schematisch als Kreis angedeutete Spleißvorrichtung 7 angeordnet, die in einer ebenfalls nicht im einzelnen gezeigten senkrecht zur Förderrichtung 4 angeordneten Führung längs der Spleißlinie 8 verfahrbar ist.

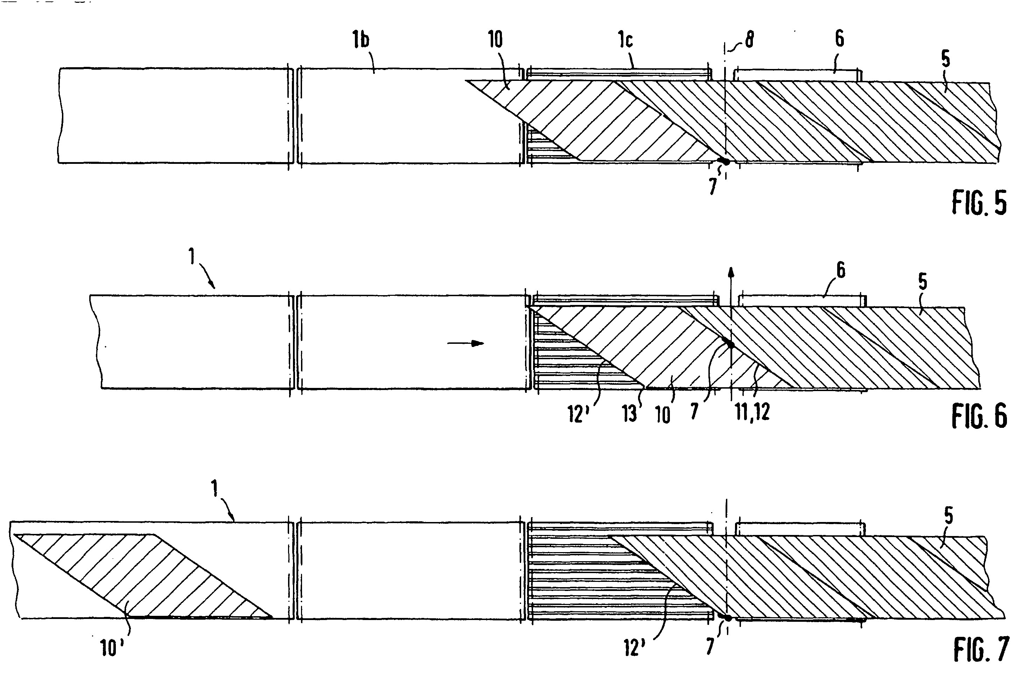

In Fig. 2 erkennt man, daß das Cordband 5 durch an sich bekannte, bevorzugt im oberen und unteren Spleißkopf angeordnete Fühlerelemente in einer Position angehalten ist, in der die Spleißlinie 8 genau mit der unteren Ecke am Beginn der nachlaufenden Kante des Cordbandes 5 übereinstimmt, so daß das Cordband 5 also exakt in der Spleißposition liegt, bei der nur die Spitze 9 auf dem Übergabeabschnitt 1c aufliegt und der Rest auf dem Abförderband 5. Bei 10 erkennt man einen noch auf dem Abschnitt 1a angeordneten Streifen, der mit dem Cordband 5 verspleißt werden soll. Hierzu wird er über die Bandabschnitte 1a und 1b herangefahren, wobei vor dem Einlaufen in den Übergabeabschnitt 1c (Fig. 3) die Stützfördereinrichtung betätigt wird, um die Spitze 9 des Cordbandes 5 über die Ebene des Übergabeabschnitts 1c, also über die Ebene der Einzelbänder 2, anzuheben. Dies ermöglicht es, den Streifen 10 durch Synchronisierung der Laufgeschwindigkeit der Abschnitte 1b und 1c auf dem Übergabeabschnitt 1c ohne jegliches Verziehen in die Spleißposition gemäß Fig. 4 zu bringen, in der die vorlaufende Kante 11 des Streifens mit der Hinterkante 12 des Cordbandes 5 zusammenstößt. Dabei wird zunächst der Streifen 10 auf dem Übergabeabschnitt 1c so weit gefördert, daß die vorlaufende Kante 11 exakt unter der nachlaufenden Kante 12 liegt. Anschließend wird die Stützfördereinrichtung, d.h. die Segmente mit den Röllchen, abgesenkt und auf diese Art und Weise das Aneinanderstoßen der Kanten 11 und 12 bewirkt. Ebenso wie bereits vorstehend die Synchronisierung des Bandabschnitts 1b des Zuführ-Transportbandes mit dem Übergabeabschnitt 1c angesprochen worden ist, um den Streifen 10 in die Spleißposition nach Fig. 4 zu verbringen, kann auch eine Synchronisierung des Übergabeabschnitts 1c mit dem Abförderband 6 erfolgen, um nach dem Herantransport des Streifens 10 an das Cordband 5, also nach Erreichen der Spleißposition dieser Teile, wie sie in Fig. 4 gezeigt ist, den Übergabeabschnitt 1c und das Abförderband 6 snychron anzutreiben, während gleichzeitig auch der Spleißkopf 7 längs der Spleißlinie 8 bewegt wird. Die Geschwindigkeit der Transportbänder und des Spleißkopfes sind dabei so aufeinander abgestimmt, daß die resultierende Geschwindigkeit genau der schrägen Querrichtung der aneinanderstoßenden Kanten 11 und 12 des Cordbandes 5 und des Streifens 10 entspricht, so daß der Spleißkopf, obgleich er sich genau senkrecht zur Förderrichtung 4 bewegt, durch die Überlagerung der Geschwindigkeiten tatsächlich der Spleißkante 11, 12 folgt und so die Verspleißung durchgeführt wird. Im gezeigten Ausführungsbeispiel, bei dem am Beginn des Spleißens (Fig. 5) die nachlaufende Spitze des Streifens 10 nicht vollständig auf dem Übergabeabschnitt 1c, sondern auch noch auf dem Bandabschnitt 1b aufliegt, erfolgt natürlich ein synchroner Antrieb der Bandabschnitte 1b, 1c und des Abförderbandes 6. Die Fig. 6 zeigt eine Zwischenstellung, bei der der Spleißkopf 7 etwa in der Mitte seiner Bewegung quer zum Corcband 5 angekommen ist. Er liegt aber durch die entsprechende Abstimmung der beiden Geschwindigkeitsvektoren stets über der Spleißlinie der aneinanderstoßenden Kanten 11 und 12. In Fig. 7 ist wieder die Position entsprechend Fig. 2 erreicht, in der das Cordband 5 unter Anhaltung der Antriebe der Transportbänder und ggf. auch durch Betätigung zusätzlicher Feststelleinrichtungen so angehalten wird, daß die untere Eckkante 13 der nachlaufenden Kante 12' des eben angespleißten Streifens 10 genau unter der Spleißlinie liegt. Der Spleißkopf 7 fährt in seine Ausgangsstellung am in der Zeichnung unteren Ende des Transportbandes zurück und ein neuer Streifen 10' wird von links über das Zuführ-Transportband 1 angeliefert, um entsprechend der vorstehend beschriebenen Schritte an die Kante 12' angespleißt zu werden.

## Patentansprüche

1. Spleißmaschine zum insbesondere stumpfen Spleißen von Cordbandstreifen aus Stahl- oder Textilcord, mit einem Zuführ-Transportband (1) zum Heranfördern der Vorderkante eines Streifens (10) an die Hinterkante des gespleißten, auf einer Abfördereinrichtung liegenden Cordbandes (5), und mit einer quer zur Förderrichtung verfahrbaren, aus einem oberen und einem unteren Spleißkopf, die gegeneinander verfahrbar sind, bestehenden Spleißvorrichtung (7), **dadurch gekennzeichnet, daß** die Spleißvorrichtung (7), bei gleichzeitiger Förderung des Cordbandes (5) und des anzuspleißenden Streifens (10), längs einer Führung senkrecht zur Förderrichtung (4) des Cordbandes (5) bewegbar ist, wobei eine Steuerung der jeweiligen Geschwindigkeiten entsprechend dem Spleißwinkel erfolgt.

2. Spleißmaschine nach Anspruch 1, **dadurch gekennzeichnet, daß** die Spleißvorrichtung (7) um eine vertikale Achse entsprechend dem Spleißwinkel verschwenkbar ist.

3. Spleißmaschine nach Anspruch 1 oder 2, **dadurch gekennzeichnet, daß** das Zuführ-Transportband (1c) im Auflagebereich des am Cordband (5) anliegenden Streifens (10) aus einer Vielzahl von beabstandeten, gemeinsam angetriebenen Einzelbändern (2) besteht, zwischen denen über die Bandebene anhebbare Stützfördereinrichtungen zum Anheben der noch vor der Spleißvorrichtung (7) liegenden Spitze des Streifens (10) nach dem Anspleißen höhenverstellbar gelagert sind.

4. Spleißmaschine nach Anspruch 3, **dadurch gekennzeichnet, daß** die Stützfördereinrichtungen an zwischen den Einzelbändern (2) verstellbar gelagerten Segmenten (3) befestigte, in Förderrichtung beabstandete Rollen umfassen.

5. Spleißmaschine nach Anspruch 4, **dadurch gekennzeichnet, daß** die Segmente (3) einzeln oder gruppenweise entsprechend dem Spleißwinkel anhebbar sind.

6. Spleißmaschine nach einem der Ansprüche 1 bis 5, **dadurch gekennzeichnet, daß** das Zuführtransportband (1) aus mehreren getrennt antreibbaren Bandabschnitten (1a, 1b, 1c) besteht.

7. Spleißmaschine nach einem der Ansprüche 1 bis 6, **dadurch gekennzeichnet, daß** der in die Spleißvorrichtung (7) einlaufende, aus Einzelbändern (2) bestehende Übergabeabschnitt (1c) des Zuführ-Transportbandes (1) wahlweise mit dem vorhergehenden Bandabschnitt oder der, vorzugsweise als Abförderband (6) ausgebildeten, Abfördereinrichtung synchron antreibbar ist.

8. Spleißmaschine nach einem der Ansprüche 1 bis 7, **gekennzeichnet durch** von Fühlerelementen in der Spleißvorrichtung (7) betätigbare Feststelleinrichtungen für das Cordband (5) und den anzuspleißenden Streifen (10).

## Claims

1. Splicing machine in particular for the butt-splicing of corded strips of steel or textile cord, having a supply conveyor belt (1) for bringing the leading edge of a strip (10) to the trailing edge of the spliced corded strip (5) lying on a discharge device, and having a splicing device (7) movable transverse to the conveying direction and consisting of an upper and a lower splicing head, which are movable relative to one another, **characterised in that** the splicing device (7), upon simultaneous feeding of the corded strip (5) and of the strip (10) to be spliced, is movable along a guide perpendicular to the conveying direction (4) of the corded strip (5), an adjustment being made to the respective speeds according to the splicing angle.

2. Splicing machine according to claim 1, **characterised in that** the splicing device (7) is pivotable about a vertical axis according to the splicing angle.

3. Splicing machine according to claim 1 or 2, **characterised in that** the supply conveyor belt (1c) consists in the region where the strip (10) abuts the corded strip (5) of a large number of spaced, communally driven individual belts (2), between which support conveyor devices liftable above the belt plane are height-adjustably mounted for lifting the tip of the strip (10) that still lies upstream of the splicing device (7) after splicing on.

4. Splicing machine according to claim 3, **characterised in that** the support conveyor devices comprise rollers spaced in the conveying direction and fixed to segments (3) adjustably mounted between the individual belts (2).

5. Splicing machine according to claim 4, **characterised in that** the segments (3) are liftable individually or in groups according to the splicing angle.

6. Splicing machine according to one of claims 1 to 5, **characterised in that** the supply conveyor belt (1) consists of a plurality of separately drivable belt sections (1a, 1b, 1c).

7. Splicing machine according to one of claims 1 to 6, **characterised in that** the transfer section (1c) of the supply conveyor belt (1) entering the splicing device (7) and consisting of individual belts (2) is selectively drivable synchronously with the passing belt section or the discharge device preferably formed as a discharge conveyor belt (6).

8. Splicing machine according to one of claims 1 to 7, **characterised by** fixing devices for the corded strip (5) and the strip (10) to be spliced on which are actuatable by sensor elements in the splicing device (7).

## Revendications

1. Machine à épisser, notamment pour assembler bout à bout par épissure des rubans de bandes de cordage en cordage d'acier ou textile, comprenant une bande de transport d'amenée (1) destinée à amener le bord avant d'un ruban (10) contre le bord arrière de la bande de cordage (5) épissée et reposant sur un dispositif de transport d'évacuation, et comprenant également un dispositif à épisser (7) pouvant être déplacé transversalement à la direction de transport et constitué d'une tête à épisser supérieure et d'une tête à épisser inférieure, **caractérisée en ce que** le dispositif à épisser (7), pour un transport simultané de la bande de cordage (5) et du ruban (10) à raccorder par épissure, peut être déplacé le long d'un guidage perpendiculaire à la direction de transport (4) de la bande de cordage (5), une commande des vitesses respectives étant effectuée conformément à l'angle d'épissure.

2. Machine à épisser selon la revendication 1, **caractérisée en ce que** le dispositif à épisser (7) peut pivoter autour d'un axe vertical conformément à l'angle d'épissure.

3. Machine à épisser selon la revendication 1 ou 2, **caractérisée en ce que** la bande de transport d'amenée (1c), dans la zone d'appui du ruban (10) appliqué contre la bande de cordage (5), est constituée d'un grand nombre de bandes individuelles (2) espacées, entraînées en commun, entre lesquelles sont montés de manière déplaçable en hauteur des dispositifs de soutien de transport pouvant être soulevés au-dessus du plan de la bande et destinés à soulever la pointe du ruban (10), qui se trouve encore en amont du dispositif à épisser, après la réalisation de l'épissure.

4. Machine à épisser selon la revendication 3, **caractérisée en ce que** les dispositifs de soutien de transport comprennent des galets espacés dans la direction de transport, fixés à des segments (3) montés de manière déplaçable entre les bandes individuelles (2).

5. Machine à épisser selon la revendication 4, **caractérisée en ce que** les segments (3) peuvent être soulevés individuellement ou par groupes, conformément à l'angle d'épissure.

6. Machine à épisser selon l'une des revendications 1 à 5, **caractérisée en ce que** la bande de transport d'amenée (1) est constituée de plusieurs tronçons de bande (1a, 1b, 1c) pouvant être entraînés séparément.

7. Machine à épisser selon l'une des revendications 1 à 6, **caractérisée en ce que** le tronçon de transfert (1c) de la bande de transport d'amenée (1), qui pénètre dans le dispositif à épisser (7) et qui est composé de bandes individuelles (2), peut être entraîné au choix de manière synchronisée avec le tronçon de bande précédent ou avec le dispositif d'évacuation de préférence réalisé sous forme de bande de transport d'évacuation (6).

8. Machine à épisser selon l'une des revendications 1 à 7, **caractérisée par** des dispositifs d'immobilisation pour la bande de cordage (5) et le ruban (10) à raccorder par épissure, qui peuvent être actionnés par des éléments de sonde dans le dispositif à épisser (7).
